# EUROPEAN PATENT APPLICATION

(11) **EP 4 632 047 A1**
(43) Date of publication of application: **15.10.2025**
(21) Application number: 24169763.0
(22) Date of filing: 11.04.2024
(51) Int. Cl.: C10L 3/10, C10L 10/04, B01D 53/14

(54) **HYDROGEN SULPHIDE AND MERCAPTAN SCAVENGING ADDITIVE CONCENTRATE COMPRISING MMA TRIAZINE AND/OR MEA TRIAZINE AND AN INORGANIC SALT**

(71) Applicant: TotalEnergies OneTech, 92400 Courbevoie (FR)
(72) Inventor: MONDKAR, Hemant Sunanda Surendra, 69360 SOLAIZE (FR)
(74) Representative: Casalonga

(57) **Abstract**

The present invention relates to an additive concentrate useful for scavenging hydrogen sulphide and organic compounds, comprising monoethanolamine triazine and/or monomethylamine triazine and at least one salt chosen from alkali metal bisulfites, alkali metal metabisulfites and hydroxylamine sulfate.

The invention also relates to a composition comprising said concentrate additive and a liquid vehicle, as well as the use of the additive concentrate or of the composition of the invention for scavenging hydrogen sulphide and/or organic compounds comprising at least one sulfhydryl group in a liquid or gaseous stream.

## Description

The present invention relates to an additive concentrate useful for scavenging hydrogen sulphide and organic compounds comprising at least one sulfhydryl group, while reducing fouling and unwanted solid deposits. Said additive concentrate comprises monoethanolamine triazine (also known as "MEA triazine") and/or monomethylamine triazine (also known as "MMA triazine") as well as a particular sulfate or bisulfite inorganic salt.

The invention also relates to a composition comprising said additive concentrate and a liquid solvent.

The present invention also relates to the use of the additive concentrate or of the composition of the invention for scavenging hydrogen sulphide and/or organic compounds comprising at least one sulfhydryl group in a liquid or gaseous stream.

The invention also relates to the use of said sulfate or bisulfite inorganic salt for preventing or reducing the formation of deposits in scavenging hydrogen sulphide and/or organic compounds comprising at least one sulfhydryl group with monoethanolamine triazine and/or monomethylamine triazine.

The present invention also relates to a method for scavenging hydrogen sulphide and/or organic compounds comprising at least one sulfhydryl group comprising contacting a hydrocarbon stream such as crude oil, fuel or natural gas with the additive concentrate or with the composition of the invention.

Hydrogen sulphide (H₂S) is a colourless and fairly toxic, flammable and corrosive gas which has a characteristic odour at a very low concentration. Hydrogen sulphide dissolves in liquid and gaseous streams such as hydrocarbon and water streams and can also be present in the vapour phase above liquid streams as well as in hydrocarbon gas such as LPG and natural gas. The hydrogen sulphide emissions can be harmful to workers operating in the drilling, production, transport, storage, and processing of such streams. It would therefore be desirable for the workers' comfort and safety to reduce or even eliminate the hydrogen sulphide emissions during the handling of said products.

Legislation has been in place for years, imposing strict regulations on hydrogen sulphide levels of hydrocarbon streams in pipelines, in storage and shipping containers.

Similar problems arise with organic compounds comprising a sulfhydryl group (-SH) such as mercaptans R-SH, thiocarboxylic acids RC(O)SH, dithiocarboxylic acids RC(S)SH, with R denoting a hydrocarbon chain. Such sulfhydryl-containing compounds are very corrosive, and are likely to release hydrogen sulphide.

A variety of chemical scavengers are available to reduce the concentration of hydrogen sulphide and sulfhydryl-containing compounds in liquid and gaseous streams containing them, in particular aqueous streams and hydrocarbon streams such as gas, crude oils and refined products. Some of the most common methods for treating hydrogen sulphide consist in contacting them with a chemical scavenger such as compounds containing a triazine group, glyoxal, as well as metal-based scavengers. Glyoxal has been used extensively as hydrogen sulphide scavenger but suffers from a major drawback since aqueous glyoxal solutions are highly corrosive and cannot be used for a gas tower application. Monoethanolamine triazine (MEA-triazine) and monomethylamine triazine (MMA triazine) have recently become common chemical scavengers used for treating hydrogen sulphide from hydrocarbon streams.

However, the use of MEA-triazine and of MMA triazine as hydrogen sulphide scavengers has the drawback of leading to the formation of solid deposits. In the case of MEA-triazine, the deposits probably at least for a part thereof result from the further reaction and polymerization of MEA-dithiazine which is the product of reaction of MEA-triazine with H₂S. The deposits mainly contain stable and water-insoluble solid compounds which can precipitate and accumulate, especially in the devices and installations used for extracting and transporting petroleum products.

As non-limitative examples of devices which may be damaged by such a fouling, mention may be made of artificial lift systems and pumps used in oil production wells, such as Progressive Cavity Pumps (often denoted PCP), Rod Lifts, Plunger Lifts, and Electric Submersible Pumps (often denoted ESPs).

Electric Submersible Pumps are particularly advantageous as they can handle a wide range of flow rates, especially from moderate to high volumes of oil, fulfil a large string of lift requirements, and be implemented in harsh environments.

However, these electric submersible pumps display a specific geometry that is very sensitive to solid fouling which may cause the pumps to malfunction.

It bespeaks that when such fouling occurs, operators need to stop the oil production for several days and initiate a chemical treatment for cleaning the pumps, especially the pumps internals including their surfaces.

Such a maintenance operation is time-consuming, so as the costs as the oil production must be halted for a long period of time and the cleaning treatment must be carried out several times, and risks damaging not only the pumps but also any part of the oil production installation. Indeed, the oil production installation and/or the electric submersible pumps may be impaired, especially during shutdown, cleaning, and/or restarting.

This maintenance operation may also have the drawback of having to be performed several times.

Hence, fouling or deposit formations linked with the hydrogen sulphide elimination treatments necessary in oil production may hinder oil productivity, lead to heavy financial losses, and shorten the lifetime of the pumps and/or the oil production installation. In addition, fouling can build-up on the surfaces of any part of the oil production installation in the same conditions as in the ESPs.

Thus, there remains a continuous need for improving existing methods for eliminating hydrogen sulphide and other compounds comprising a sulfhydryl group in an efficient, economic and safe manner, not only in crude oil extraction systems but in all situations where hydrogen sulphide and/or sulfhydryl compounds needs to be removed. In particular, there remains a need for reducing the formation of unwanted deposits in the methods involving MEA-triazine and MMA-triazine as scavenging agents.

The Applicant has now discovered that the combination of MEA-triazine and/or MMA-triazine with a particular inorganic salt chosen from alkali metal bisulfites, alkali metal metabisulfites and hydroxylamine sulfate was particularly efficient for scavenging hydrogen sulphide and organic compounds comprising at least one sulfhydryl group, while reducing the formation of unwanted deposits.

Therefore, the present invention relates to an additive concentrate useful for scavenging hydrogen sulphide and mercaptan in hydrocarbon streams, said concentrate comprising:
- monoethanolamine triazine and/or monomethylamine triazine, and
- at least one salt chosen from alkali metal bisulfites, alkali metal metabisulfites and hydroxylamine sulfate.

The additive concentrate of the present invention allows achieving an efficient scavenging of hydrogen sulphide and organic compounds comprising at least one sulfhydryl group in a short contact time, while preventing or reducing fouling as well as the formation of unwanted deposits, with regard to prior art scavenging compositions comprising MEA-triazine or MMA-triazine.

In particular, the formation of deposits, in particular of water-insoluble solid deposits, can be greatly reduced.

At the same time, the efficiency of MEA-triazine and MMA-triazine as scavenging agents remains high.

The invention also relates to a composition comprising said additive concentrate in a liquid vehicle.

The present invention also relates to the use of the additive concentrate or of the composition of the invention for scavenging hydrogen sulphide and/or organic compounds comprising at least one sulfhydryl group in a liquid or gaseous stream.

The invention also relates to the use of at least one salt chosen from alkali metal bisulfites, alkali metal metabisulfites and hydroxylamine sulfate for preventing or reducing the formation of deposits in the scavenging of hydrogen sulphide and/or organic compounds comprising at least one sulfhydryl group with monoethanolamine triazine and/or monomethylamine triazine.

The present invention also relates to a method for scavenging hydrogen sulphide and/or mercaptans comprising contacting a hydrocarbon stream such as crude oil, fuel or natural gas with the scavenging additive concentrate or with the scavenging composition of the invention.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, C_{N} compound or group designates a compound or a group containing in its chemical structure N carbon atoms.

### The triazines

The additive concentrate of the invention comprises monoethanolamine triazine, also commonly referred to as MEA triazine and/or monomethylamine triazine also commonly referred to as MMA triazine.

The complete name of monomethylamine triazine is hexahydro-1,3,5-tris(methyl)-s-triazine.

The complete name of monoethanolamine triazine is hexahydro-1,3,5-tris(hydroxyethyl)-s-triazine and the developed formula is the following:

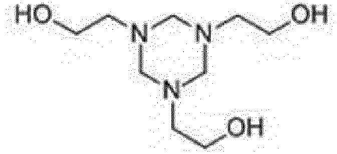

Monoethanolamine triazine is preferred.

The additive concentrate preferably contains a total amount of monomethylamine triazine and/or monoethanolamine triazine ranging from 25% to 80% by weight, preferably from 30 to 75% by weight, more preferably from 35% to 70% by weight, even more preferably from 40 to 65% by weight, and better still from 45 to 60% by weight, relative to the total weight of the additive concentrate.

According to a preferred embodiment, the additive concentrate contains an amount of monoethanolamine triazine ranging from 25% to 80% by weight, preferably from 30 to 75% by weight, more preferably from 35% to 70% by weight, even more preferably from 40 to 65% by weight, and better still from 45 to 60% by weight, relative to the total weight of the additive concentrate.

### Inorganic salts

The additive concentrate of the invention comprises at least one salt chosen from alkali metal bisulfites, alkali metal metabisulfites and hydroxylamine sulfate.

Alkali metal bisulfites also known as alkali metal hydrogen sulfites are salts of formula M(HSO₃) with M denoting an alkali metal.

Preferred alkali metal bisulfites are chosen from sodium bisulfite (sodium hydrogen sulfite) and potassium bisulfite (potassium hydrogen sulfite). Sodium bisulfite is particularly preferred.

Alkali metal metabisulfites also known as alkali metal pyrosulfites are salts of formula M₂S₂O₅ with M denoting an alkali metal.

Preferred alkali metal metabisulfites are chosen from sodium metabisulfite (sodium pyrosulfite) and potassium metabisulfite (potassium pyrosulfite). Sodium metabisulfite is particularly preferred.

Hydroxylamine sulfate also known as hydroxyl ammonium sulfate is the sulfuric acid salt of hydroxylamine, of formula (NH₃OH)₂SO₄.

According to a preferred embodiment, said at least one salt comprises at least one alkali metal bisulfite, preferably sodium bisulfite. According to a more preferred embodiment, said at least one salt is sodium bisulfite.

The additive concentrate preferably contains a total amount of the above described salt(s) ranging from 20% to 75% by weight, preferably from 25% to 70% by weight, more preferably from 30% to 65% by weight, and even more preferably from 35% to 60% by weight, and better still from 40% to 55% by weight, relative to the total weight of the additive concentrate.

The additive concentrate preferably contains a total amount of alkali metal bisulfite(s) ranging from 20% to 75% by weight, preferably from 25% to 70% by weight, more preferably from 30% to 65% by weight, and even more preferably from 35% to 60% by weight, and better still from 40% to 55% by weight, relative to the total weight of the additive concentrate.

The additive concentrate preferably contains an amount of sodium bisulfite ranging from 20% to 75% by weight, preferably from 25% to 70% by weight, more preferably from 30% to 65% by weight, and even more preferably from 35% to 60% by weight, and better still from 40% to 55% by weight, relative to the total weight of the additive concentrate.

Preferably, the weight ratio between the total amount of monoethanolamine triazine and/or monomethylamine triazine and the total amount of salt(s) chosen from alkali metal bisulfites, alkali metal metabisulfites and hydroxylamine sulfate lies within the range from 1:1 to 100:1, preferably from 2:1 to 10:1, more preferably from 2:1 to 5:1.

According to a preferred embodiment, the weight ratio between the amount of monoethanolamine triazine and the total amount of salt(s) chosen from alkali metal bisulfites lies within the range from 1:1 to 100:1, preferably from 2:1 to 10:1, more preferably from 2:1 to 5:1.

According to a more preferred embodiment, the weight ratio between the amount of monoethanolamine triazine and the amount of sodium bisulfite lies within the range from 1:1 to 100:1, preferably from 2:1 to 10:1, more preferably from 2:1 to 5:1.

The additive concentrate of the invention may be mixed with a liquid vehicle which facilitates its use and its dispersion within the medium to be treated.

Therefore, another object of the invention is a composition comprising an additive concentrate as defined above and at least one liquid vehicle.

### Liquid vehicles

By liquid, it is meant a compound or a mixture of compounds which is in liquid form at ambient temperature (20°C) and atmospheric pressure (1,013.10⁵ Pa).

According to a preferred embodiment, the liquid vehicle consists of water or a mixture of water with one or more organic solvent(s).

Such organic solvents may in particular be chosen from (poly) oxyalkyl ethers, such as butyl carbitol (diethylene glycol monobutyl ether), polyethylene glycols, as well as mixtures thereof.

The choice of the liquid vehicle mainly depends on the final use of the composition. When the composition is intended to be used for scavenging hydrogen sulphide and/or sulfhydryl-containing compounds in an aqueous stream, water may be a vehicle of choice. When the composition is intended to be used for scavenging hydrogen sulphide and/or sulfhydryl-containing compounds in a hydrocarbon stream or in a mixture of water and hydrocarbons (such as a mixture of crude oil and brine), a mixture ow water and of organic solvent may be preferred.

The composition of the invention advantageously contains an amount of liquid vehicle ranging from 30 to 90% by weight, preferably from 40 to 85% by weight, more preferably from 50 to 80% by weight, relative to the total weight of the composition.

The composition of the invention advantageously contains an amount of the additive concentrate ranging from 10 to 70% by weight, preferably from 15 to 60% by weight, more preferably from 20 to 50% by weight, relative to the total weight of the composition.

### Defoamer

The composition of the invention (ie the composition comprising the concentrate additive and the liquid vehicle) may further comprise art least one defoamer, preferably at least one silicone-based defoamer.

The defoamers are preferably chosen from polydimethylsiloxane polymers, more preferably from grafted polydimethylsiloxane polymers.

The composition of the invention may contain an amount of defoamer ranging from 0.1 to 2% by weight, relative to the total weight of the composition.

### Use

The present invention also encompasses the use of an additive concentrate or of a composition as described above for scavenging hydrogen sulphide and/or organic compounds comprising at least one sulfhydryl group in a liquid or gaseous stream.

The organic compounds comprising at least one sulfhydryl group are especially chosen from mercaptans, thiocarboxylic acids and dithiocarboxylic acids.

The liquid or gaseous stream may be a monophasic stream such as in particular an aqueous stream or an organic stream, or a multiphasic stream containing both water and hydrocarbons (such as for instance oil/water or oil/water/gas or gas/water).

According to a preferred embodiment, the additive concentrate and the composition of the invention are used for scavenging hydrogen sulphide (H₂S) and mercaptans (compounds of formula RSH) in a hydrocarbon containing stream.

The mercaptans which needs to be eliminated are typically those of formula RSH wherein R is an alkyl or alkenyl group containing from 1 to 8, preferably from 1 to 6 and more preferably from 1 to 4 carbon atoms.

The hydrocarbon containing streams are typically selected from crude petroleum oils, hydrocarbon fractions and residues deriving from the distillation thereof, light petroleum gas (LPG) and natural gas, as well as mixtures thereof with aqueous phases such as brine.

Such streams contain H₂S and/or mercaptans in total amounts which may range for example from 1 to 10 000 ppm by weight.

The present invention also concerns the use of at least one salt chosen from alkali metal bisulfites, alkali metal metabisulfites and hydroxylamine sulfate for preventing or reducing the formation of solid deposits in the scavenging of hydrogen sulphide (H₂S) and/or mercaptans with monoethanolamine triazine and/or monomethylamine triazine.

### Method

The present invention also relates to a method for scavenging hydrogen sulphide and/or organic compounds comprising at least one sulfhydryl group such as mercaptans in a liquid or gaseous stream comprising contacting said stream with the additive concentrate or with the composition of the invention.

As described above, the liquid or gaseous stream may be monophasic such as in particular an aqueous stream or an organic stream, or multiphasic such as a stream containing both water and hydrocarbons (such as for instance oil/water or oil/water/gas or gas/water).

According to a preferred embodiment, the stream contains hydrocarbons. The stream may be especially selected from crude petroleum oils, hydrocarbon fractions and residues deriving from the distillation thereof such as in particular fuel oils and heavy fuel oils, light petroleum gas (LPG) and natural gas, as well as mixtures thereof with aqueous compositions such as brine.

The amount of additive concentrate or composition used per amount of stream depends on the concentration of active components (MEA-triazine and/or MMA-triazine and inorganic salt) as well as the total content of hydrogen sulphide and/or organic compounds comprising at least one sulfhydryl group in the liquid or gaseous stream.

The concentrate or the composition is contacted with the liquid or gaseous stream for a time sufficient to achieve an effective scavenging and removal of hydrogen sulphide and of organic compounds comprising at least one sulfhydryl group.

The example hereafter only aims at illustrating the present invention and shall not be interpreted so as to limit its scope.

### Example

### 1. Preparation of scavenging compositions

Scavenging compositions A1 (comparative) and A2 (according to the invention) were prepared as described below:
Scavenging composition A1 (comparative): a commercial solution of monoethanolamine triazine having a concentration of 60% by weight in water was diluted with water so as to obtain a concentration of monoethanolamine triazine of 30% by weight.
Scavenging composition A2 (invention): obtained by mixing 50 ml of composition A1 with 17 ml of an aqueous solution of sodium bisulfite having a concentration of 40% by weight in water.

### 2. H₂S scavenging performance evaluation

Scavenging compositions A1 and A2 were tested for their efficiency in the scavenging of hydrogen sulphide following the test protocol detailed below.

The test was carried out at room temperature. A 250 mL glass purger was charged with 100 mL of an inert solvent. A gas consisting of N₂ containing H₂S at a concentration of 50 ppm was released by a bubbling tube at a flow rate of 0.4 mL/min into the solvent contained in said purger. The solvent was continuously agitated by using a magnetic stirrer. The gas exiting the solvent and leaving the purger was conveyed to a H₂S detector.

At the beginning of each test, a setup was made as follows: the gas (H₂S in N₂ at a concentration of 50 ppm) was passed through the purger with a 0.4 mL/min flow rate, and the H₂S detector started recording the H₂S concentration at the outlet of the purger. Once the outlet H₂S concentration remained stable (with a value of 50 ppm constant reading at the detector), the scavenging composition (1ml of said composition is mixed with 2ml of butyl carbitol to ensure proper injection into the reactor) to be tested was quickly injected into the purger. As the scavenging composition starts reacting with H₂S which results in a reduction of the H₂S concentration at the outlet, as recorded by the detector. The H₂S concentration was recorded at every 5 sec time intervals.

An interval of time of 30 min was respected between each test. In each test, once the H₂S scavenger has been injected into the purger, the concentration of H₂S recorded by the detector started decreasing from 50 ppm down towards 0 ppm, depending on the efficiency of the scavenging composition. The higher the H₂S scavenging efficiency of the composition, the faster the H₂S concentration recorded by the detector drops and the longer the rate of H₂S concentration recorded by the detector remains low. It was also observed that, once the scavenging composition was consumed, the concentration of H₂S recorded by the detector started increasing slowly back to 50 ppm.

In both cases, scavenging compositions A1 and A2 allowed achieving an efficient removal of hydrogen sulphide.

### 3. Evaluation of fouling and solid deposits

A second test was performed in order to assess the formation of solid deposits during H₂S scavenging.

The test was carried out at room temperature. A 200 mL glass purger was charged with 50g of the scavenging composition. A gas consisting of H₂S was released into the composition contained in said purger at a flow rate of 0.3 L/min during 30 min.

In each case, a rise of the temperature of the purger was observed, which confirmed that the scavenging reaction, which is an exothermic reaction, occurred.

In case of scavenging composition A1 (comparative), a sticky mass formed quickly over the purging system. These deposits were insoluble in water.

In case of scavenging composition A2 (invention), the amounts of deposits formed in the purging system were visibly reduced and less sticky. The deposits were soluble in water which made then easier to remove.

In both cases, the solid deposits formed during the test were removed, filtered, dried at 50°C and weighted. The amounts of deposits obtained are indicated below:

| **Scavenging composition** | **Amounts of deposits (g)** |
|---|---|
| A1 (comparative) | 4.20 |
| A2 (invention) | 0.97 |

This test shows that scavenging composition A2 according to the invention leads to a very important reduction of fouling with regard to comparative composition A1. The solid deposits are not only greatly reduced, but also less sticky and much easier to eliminate.

## Claims

1. Additive concentrate comprising:
- monoethanolamine triazine and/or monomethylamine triazine, and
- at least one salt chosen from alkali metal bisulfites, alkali metal metabisulfites and hydroxylamine sulfate.

2. Additive concentrate as defined in claim 1, wherein the total amount of monoethanolamine triazine and/or monomethylamine triazine ranges from 25% to 80% by weight, preferably from 30 to 75% by weight, more preferably from 35% to 70% by weight, even more preferably from 40 to 65% by weight, and better still from 45 to 60% by weight, relative to the total weight of the additive concentrate.

3. Additive concentrate as defined in any preceding claim, comprising monoethanolamine triazine.

4. Additive concentrate as defined in any preceding claim, wherein said at least one salt is chosen from alkali metal bisulfites, preferably from sodium bisulfite and potassium bisulfite.

5. Additive concentrate as defined in claim 4, wherein said at least one salt is sodium bisulfite.

6. Additive concentrate as defined in any preceding claim, wherein the total amount of said salt(s) chosen from alkali metal bisulfites and hydroxylamine sulfate ranges from 20% to 75% by weight, preferably from 25% to 70% by weight, more preferably from 30% to 65% by weight, and even more preferably from 35% to 60% by weight, and better still from 40% to 55% by weight, relative to the total weight of the additive concentrate.

7. Additive concentrate as defined in any preceding claim, wherein the weight ratio between the amount of monoethanolamine triazine and/or monomethylamine triazine and the total amount of salt(s) chosen from alkali metal bisulfites, alkali metal metabisulfites and hydroxylamine sulfate lies within the range from 1:1 to 100:1, preferably from 2:1 to 10:1, more preferably from 2:1 to 5:1.

8. Composition comprising an additive concentrate as defined in any preceding claim and at least one liquid vehicle.

9. Composition as defined in the preceding claim, wherein said liquid vehicle consists of water or a mixture of water with one or more organic solvent(s).

10. Composition as defined in anyone of claims 7 and 8, wherein the amount of liquid vehicle ranges from 30 to 90% by weight, preferably from 40 to 85% by weight, more preferably from 50 to 80% by weight, relative to the total weight of the composition.

11. Composition as defined in anyone of claims 7 to 9, wherein the amount of the additive concentrate ranges from 10 to 70% by weight, preferably from 15 to 60% by weight, more preferably from 20 to 50% by weight, relative to the total weight of the composition.

12. Use of an additive concentrate as defined in anyone of claims 1 to 7 or of a composition as defined in anyone of claims 8 to 11 for scavenging hydrogen sulphide and/or organic compounds comprising at least one sulfhydryl group such as mercaptans in a liquid or gaseous stream.

13. Use of at least one salt chosen from alkali metal bisulfites, alkali metal metabisulfites and hydroxylamine sulfate for preventing or reducing the formation of solid deposits in the scavenging of hydrogen sulphide and/or mercaptans with monoethanolamine triazine and/or monomethylamine triazine.

14. Method for scavenging hydrogen sulphide and/or organic compounds comprising at least one sulfhydryl group such as mercaptans in a liquid or gaseous stream, comprising contacting said stream with an additive concentrate as defined in anyone of claims 1 to 7 or with a composition as defined in anyone of claims 8 to 11.
